# EUROPÄISCHE PATENTANMELDUNG

(11) **EP 2 236 178 A1**
(43) Veröffentlichungstag der Anmeldung: **06.10.2010**
(21) Anmeldenummer: 09016037.5
(22) Anmeldetag: 28.12.2009
(51) Int. Cl.: A63F 7/06, B62K 21/26

(54) **Wechselgriff für rohrförmige Betätigungsstangen**

(30) Priorität: 02.04.2009 DE 202009004563 U
(71) Anmelder: Zimmermann, Hildegard, 53577 Neustadt (DE)
(72) Erfinder: Zimmermann, Dirk, 56593 Horhausen (DE); Zimmermann, Frank, 56593 Horhausen (DE)
(74) Vertreter: Kossobutzki, Walter

(57) **Zusammenfassung**

Die Erfindung bezieht sich auf einen Wechselgriff (2) für eine rohrförmige Betätigungsstange (1), beispielsweise von Spiel- und Fitnessgeräten, Fahrrädern oder dergleichen, mit einer einen Endbereich der Betätigungsstange aufnehmenden Bohrung.

Um zu erreichen, dass ein solcher Wechselgriff (2) einfach, sicher und schnell anzubringen ist, eine hohe Spanngenauigkeit hat und dabei das Stangenende schont und letztlich wieder mühelos entfernt werden kann, sind innerhalb der Bohrung des Wechselgriffes (2) zwei mit Abstand voneinander angeordnete Anpresselemente (A,B) angeordnet sind, von denen das erste Anpresselement (A) an der Innenseite und das zweite Anpresselement (B) an der Außenseite der rohrförmigen Betätigungsstange (1) angreift.

## Beschreibung

Die Erfindung bezieht sich auf einen Wechselgriff für eine rohrförmige Betätigungsstange, beispielsweise von Spiel- und Fitnessgeräten, Fahrrädern oder dergleichen, mit einer einen Endbereich der Betätigungsstange aufnehmenden Bohrung.

Tischfußball-Geräte wurden ursprünglich als Spiel- und Unterhaltungsgeräte konzipiert. Sie wurden hauptsächlich in Gaststätten eingesetzt. Seit mehr als zehn Jahren hat sich jedoch aus Tischfußball eine Sportart entwickelt, die vor allem in Vereinsheimen, öffentlichen Sportstätten, Freizeit- und Jugendzentren Eingang gefunden hat.

Im Zuge des Sportgedankens sind jedoch die Anforderungen an die Ausstattung derartiger Tischfußball-Geräte ständig gewachsen. Da die die Spielfiguren tragenden Betätigungsstangen über Griffe an den Enden der Betätigungsstangen von Hand betätigt werden, kommt den auf denselben befindlichen Griffen für die Spielsicherheit und die Spielgenauigkeit, oder etwas allgemeiner gesprochen, für die Spieltechnik eines Spielers, ganz besondere Bedeutung zu. Die von Spieler zu Spieler unterschiedliche Form, Größe, Haltung etc. einer Hand kann dazu führen, dass bestimmte Griffformen für den einen Spieler günstig sind, während sie für einen anderen Spieler eher nachteilig wirken. Das hat dann dazu geführt, dass die Spieler für Wettkämpfe eine freie Griffwahl gefordert haben. Dem haben die Sportverbände mittlerweile zugestimmt. Bei sportlichen Tischfußball-Wettkämpfen können nunmehr Spieler mit Griffen ihrer eigenen Wahl antreten. Dazu ist es erforderlich, dass die Griffe auswechselbar gestaltet sind, während sie ursprünglich fest, beispielsweise durch Klebung, auf den Enden der Betätigungsstangen angebracht waren.

So einfach diese neue Situation klingt, so vielschichtig und folgenschwer kann sie sich in der Praxis darstellen. Wenn jetzt einem Spieler ein Spieltisch mit freien Stangenenden zugewiesen bzw. überlassen wird, ist er dafür verantwortlich, dass die notwendigen Griffe an den Betätigungsstangen präzise und sicher für seine Spieldauer angebracht werden. Dabei muss er Veränderungen, Beschädigungen oder ähnliches an den Enden der Betätigungsstangen vermeiden, da er sie für das nächste Spiel dem nächsten Spieler in demselben neutralen Zustand weitergeben bzw. überlassen muss, wie er sie vorher übernommen hat. Hilfsmittel, wie Klebstoff oder dergleichen, an deren Einsatz man bei fest bzw. dauerhaft anzubringenden Handgriffen denken konnte, scheiden aus. Ebenso ist eine besondere Behandlung, beispielsweise ein Aufrauen der Oberfläche der Enden der Betätigungsstangen nicht gestattet.

Soll also die Verwendung individueller und damit auswechselbarer Handgriffe Erfolg haben, so muss eine sichere Anbringung derselben an den Enden der Betätigungsstangen unter erschwerten Bedingungen erfolgen. Für diese ist der Spieler nicht nur verantwortlich, sondern er muss sie in aller Regel auch selbst besorgen. Die Anbringung soll außerdem keine Beschädigung der Betätigungsstangen oder der Stangenenden nach sich ziehen, ja noch nicht einmal Spuren hinterlassen. Bereits diese Hinweise zeigen, dass ein durchaus wünschenswertes Ziel nicht ohne Weiteres oder auf x-beliebige Weise zu erreichen ist. Als Beispiel für eine Art von Notlösung könnten Wechselgriffe sein, bei denen entweder am offenen Ende des Handgriffes eine quer zur Bohrung für die Aufnahme des Endes der Betätigungsstange eingedrehte Feststellschraube angeordnet oder bei einem geschlitztem Ende des Handgriffes ein Spannbügel mit Spannschraube vorgesehen ist.

Der vorliegenden Erfindung liegt deshalb die Aufgabe zugrunde, einen Wechselgriff für die Enden von Betätigungsstangen beispielsweise von Spiel- und Fitnessgeräten, Fahrrädern oder dergleichen zu schaffen, der einfach ausgebildet sowie sicher und in kürzester Zeit anzubringen ist, der darüber hinaus eine hohe Spanngenauigkeit hat, dabei das Stangenende schont und letztlich wieder mühelos und ohne Spuren am Ende der Betätigungsstange zu hinterlassen entfernt werden kann. Zusätzlich soll der Wechselgriff so ausgebildet sein, dass er auch an Enden von Betätigungsstangen mit unterschiedlichen Außen- und /oder Innendurchmessern angebracht werden kann.

Zur Lösung dieser Aufgabe wird gemäß der Erfindung bei einem Wechselgriff der eingangs beschriebenen Gattung vorgeschlagen, dass innerhalb der Bohrung des Wechselgriffes zwei mit Abstand voneinander angeordnete Anpresselemente ausgebildet sind, von denen das erste Anpresselement an der Innenseite und das zweite Anpresselement an der Außenseite der rohrförmigen Betätigungsstange angreift.

Durch eine solche einfache Befestigung des Wechselgriffes ist es möglich, denselben in sehr kurzer Zeit mit hoher Spanngenauigkeit sicher an der Betätigungsstange zu befestigen und auch wieder zu lösen. Durch die Anpresselemente bleiben keinerlei Spuren an der Betätigungsstange zurück.

Weiter Ausbildungen eines Wechselgriffes gemäß der Erfindung sind in den Ansprüchen 2 bis 12 offenbart.

Die Erfindung sowie weitere Vorteile derselben werden nachfolgend anhand in einer Zeichnung dargestellter Ausführungsbeispiele näher erläutert. Dabei zeigen
- Figur 1: ausschnittsweise einen Wechselgriff gemäß der Erfindung im Schnitt und
- Figur 2: ebenfalls ausschnittsweise eine weitere Ausbildung eines Wechselgriffes, auch im Schnitt.

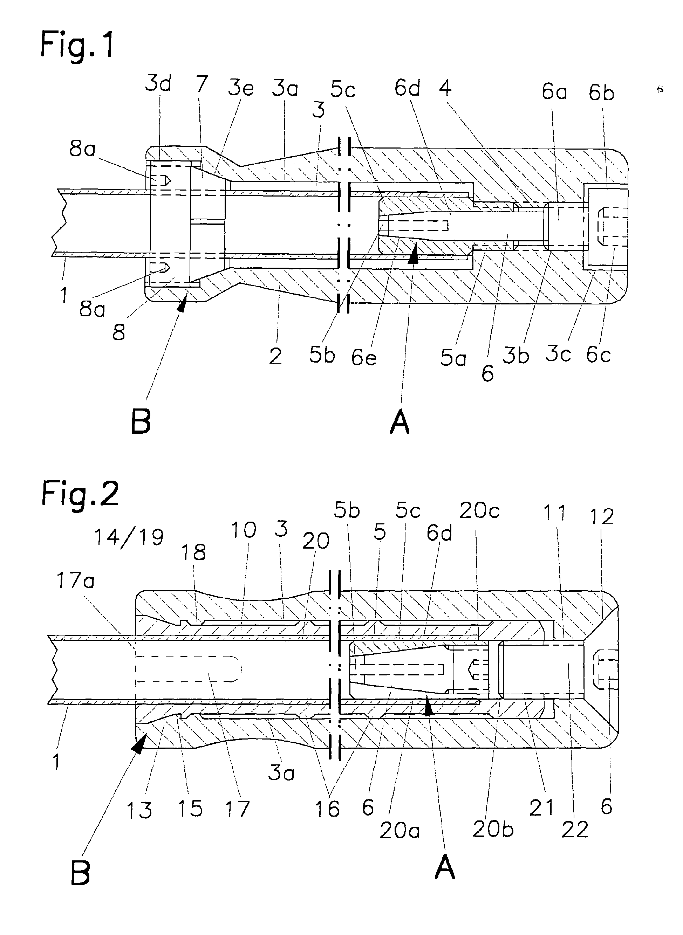

In der Figur 1 der Zeichnung ist das Ende einer nur angedeuteten, rohrförmigen Betätigungsstange 1, beispielsweise eines an sich bekannten, jedoch nicht dargestellten Tischfußballgerätes zu sehen, auf der die Spielfiguren in an sich bekannter Weise angebracht sind. Auf diesem Ende der rohrförmigen Betätigungsstange 1 ist ein Wechselgriff 2, der aus Metall, vorzugsweise aus Aluminium, aus Kunststoff oder einem Werkstoffverbund bestehen, befestigt, der zu diesem Zweck eine zentrale, jedoch in ihrem Querschnitt abgestufte Bohrung 3 besitzt und über zwei mit Abstand voneinander und möglichst nahe den Endbereichen des Wechselgriffes 2 befindlichen, unterschiedlich ausgebildeten Anpresselementen "A" und "B" auf der Betätigungsstange 1 lösbar gesichert ist. In den Bereich 3a mit dem größeren Querschnitt der Bohrung 3 ist die Betätigungsstange 1 von außen bis zum Boden oder bis kurz vor dem Boden des Bereiches 3a eingesteckt. Die Form des Wechselgriffes 2 kann dabei weitgehend beliebig ausgebildet sein. Sie wird jedoch immer von dem jeweiligen Spieler ausgesucht und ist insbesondere der Form, der Größe und der Haltung seiner Hand bzw. seiner Hände angepasst.

Für die Sicherung des Wechselgriffes 2 auf der rohrartigen Betätigungsstange 1 weist derselbe im Anschluss an den Bereich 3a der Bohrung 3 mit dem größeren Querschnitt einen im Querschnitt reduzierten Zwischenbereich 3b auf, der in diesem Ausführungsbeispiel durchgehend mit einem Innengewinde 4 versehen ist. An diesen Zwischenbereich 3b schließt sich offen nach außen wiederum ein geringfügig erweiterter Bereich 3c an. In das Innengewinde 4 des Wechselgriffes 2 ist von dem Bereich 3a der Bohrung 3 aus eine Art Spreizdübel 5 eingeschraubt, der für diesen Zweck einen mit Außengewinde versehenen Zapfen 5a mit verringertem Querschnitt besitzt. Bedarfsweise kann vor dem Einschraubvorgang der mit Außengewinde versehene Zapfen 5a des Spreizdübels 5 mit einem geeigneten Kleber bestrichen werden, der dann in der eingeschraubten Endlage des Spreizdübels 5 aushärtet und eine dauerhafte Verbindung zwischen dem Spreizdübel 5 und dem Wechselgriff 2 sicher stellt. Dieses Einschrauben des Spreizdübels 5 muss jedoch erfolgen, bevor das Ende der rohrförmigen Betätigungsstange 1 in die Bohrung 3 des Wechselgriffes 2 eingesteckt bzw. der Wechselgriff 2 auf dieses Ende der Betätigungstange 1 aufgesteckt wird. Der übrige Bereich des Spreizdübels 5 weist einen Außendurchmesser auf, der nur geringfügig kleiner als der Innendurchmesser der rohrförmigen Betätigungsstange 1 ist. In diesem Bereich ist der Spreizdübel 5 mit mindestens zwei Schlitzen 5b versehen, die vorteilhaft sich gegenüberliegend angeordnet sind. Es ist auch möglich, drei oder mehr Schlitze 5b vorzusehen, die dann vorteilhaft gleichmäßig über den Umfang des Spreizdübels 5 verteilt angeordnet sind. Diese Schlitze 5b geben die Möglichkeit, dass die dadurch entstandenen Schenkel des Spreizdübels 5, die innen eine konische Fläche besitzen, auseinandergespreizt und damit der Spreizdübel 5 aufgeweitet und an der Innenwandung der rohrförmigen Betätigungsstange 1 unter Spannung zum Anliegen kommen bzw. angepresst werden kann.

Für diesen Vorgang wird in die Bohrung 3, von dem Bereich 3c ausgehend, eine Spannschraube 6 eingesteckt, die mit einem Gewindezapfen 6a in das Innengewinde des Bereiches 3b der Bohrung 3 eingedreht wird und die für diesen Zweck einen Kopf 6b, beispielsweise mit einem Innensechskant 6c, für einen entsprechenden Schlüssel besitzt. Ferner schließt sich an den Gewindezapfen 6a ein Schaft 6d an, der in Richtung auf sein vorderes bzw. freies Ende in einen Konus 6d übergeht, der in seiner Konizität den konischen Flächen der beiden Schenkel 5c des Spreizdübels 5 entspricht. Durch entsprechendes Drehen der Spannschraube 6 kann nun der Wechselgriff 2 in diesem Bereich entweder fest mit dem rohrförmigen Ende der Betätigungsstange 1 verspannt bzw. die vorher erzeugte Verspannung gelöst werden. Der Spreizdübel 5 und die Spannschraube 6 bilden zusammen das sogenannte Anpresselement "A".

Die Bohrung 3 des Wechselgriffes 2 weist an der Eintrittsseite für die Betätigungsstange 1 einen erweiterten Bereich auf, der aus einem zylindrischen Teil 3d mit einem Innengewinde und einem konischen Teil 3e besteht und von denen der letztere in den Bereich 3a der Bohrung 3 mündet. Der konische Teil 3e nimmt einen Ring 7 mit konischer Mantelfläche auf, dessen Konizität dem Teil 3e der Bohrung 3 entspricht. Der Ring 7 weist entweder einen verhältnismäßig breiten Schlitz 7a auf oder ist durch zwei, einen vorgegebenen Abstand voneinander aufweisende Ringhälften gebildet. In den mit Gewinde versehenen zylindrischen Teil 3d ist eine Mutter 8 eingedreht, die an ihrer nach außen gerichteten Stirnfläche zwei sich diametral gegenüberliegende, zylindrische Vertiefungen 8a aufweist, in die Stifte eines entsprechend ausgebildeten, an sich bekannten Werkzeuges einrasten können. Mittels dieses Werkzeuges kann die Mutter 8 in das Innengewinde des Teiles 3d eingeschraubt werden. Bei diesem Einschrauben wird der Ring 7 aufgrund des Schlitzes 7a bzw. der beiden Ringhälften geringfügig verformt und dadurch fest gegen die äußere Mantelfläche der Betätigungsstange 1 gepresst, so dass der Wechselgriff 2 auch in diesem Bereich fest und sicher mit der Betätigungsstange 1 verspannt ist. Der Ring 7 in Verbindung mit dem konischen Teil 3e des Wechselgriffes 2 und die Mutter 8 bilden hier das sogenannte zweite Anpresselement "B". Bei diesem Ausführungsbeispiel der Erfindung werden also die beiden Anpresselemente "A" und "B" von den sich gegenüberliegenden Stirnflächen des Wechselgriffes aus zur Wirkung gebracht und erfordern jeweils ein eigenes Werkzeug.

Das Ausführungsbeispiel der Figur 2 unterscheidet sich gegenüber dem Ausführungsbeispiel der Figur 1 dadurch, dass sich hier zwischen der Betätigungsstange 1 und dem Wechselgriff 2 eine Zwischenhülse 10 befindet, die auch als Adapter bezeichnet werden kann und die bedarfsweise auswechselbar ist. Ferner werden die beiden Anpresselemente "A" und "B" nur von einer Stirnfläche des Wechselgriffes 2 aus zur Wirkung gebracht. Für mit dem Ausführungsbeispiel der Figur 1 übereinstimmende Teile werden jedoch nachfolgend die gleichen Bezugszeichen verwendet.

Der Wechselgriff 2 besitzt hier ebenfalls eine abgestufte Bohrung 3, dessen im Querschnitt größerer Bereich 3a sich fast über die gesamte Länge des Wechselgriffes 2 erstreckt und die an ihrem bodenseitigen Ende in einen zylindrischen Teil 11 mit einer sich nach außen anschließenden Ansenkung 12 übergeht. Ferner weist die Bohrung 3 an ihrem der Ansenkung 12 abgewandten Ende einen umlaufenden Kragen 13 mit nasenartigem Querschnitt auf, der an seiner nach außen bzw. vorne gerichteten Seite eine konische, sich nach außen erweiternde Ringfläche 14 besitzt. Von außen gesehen, befindet sich hinter dem Kragen 13 eine umlaufende Rille 15 mit verhältnismäßig geringem Querschnitt.

In die Bohrung 3 des Wechselgriffes 2 ist die vorerwähnte Zwischenhülse 10 möglichst spielfrei eingeschoben. Um dieses Einschieben zu erleichtern, können an der äußeren Mantelfläche der Zwischenhülse 10 leistenartige, umlaufende Vorsprünge 16 vorgesehen sein. In das im Wechselgriff 2 nach außen gerichtete Ende der Zwischenhülse 10 sind mindestens zwei, vorteilhaft jedoch vier in axialer Richtung verlaufende Schlitze 17 eingearbeitet, von denen in der Figur 2 der Zeichnung jedoch nur der rückseitige Schlitz 16 zu sehen ist. Zwischen den Schlitzen 17 entstehen dadurch axiale Finger 17a. Ferner ist die Zwischenhülse an diesem Ende mit einer vorteilhaft umlaufenden Vertiefung 18 versehen, die in ihrem Querschnitt zumindest annähernd dem Kragen 13 des Wechselgriffes 2 entspricht, und die daher auch eine konische, mit der Ringfläche 14 zusammenwirkende Ringfläche 19 aufweist. Beim Einschieben der Zwischenhülse 10 in die Bohrung 3 des Wechselgriffes 2 werden nun die Finger 17a der Zwischenhülse 10 durch den Kragen 13 des Wechselgriffes 2 so weit nach innen gedrückt, bis sie anschließend mit ihrer Vertiefung 18 - wie in der Figur 2 zu sehen - am Kragen 13 einrasten. Damit ist zunächst die Lage der Zwischenhülse 10 im Wechselgriff 2 gesichert, so dass die Zwischenhülse 10 nicht mehr aus dem Wechselgriff 2 herausfallen bzw. herausrutschen kann.

Die Zwischenhülse 10 weist eine axiale Bohrung 20 mit zwei Bereichen 20a und 20b mit unterschiedlich großen Querschnitten auf. Der Bereich 20a ist so groß ausgebildet, dass er die Betätigungsstange 1 mit geringem Spiel aufnehmen kann, die dann in ihrer Endlage mit ihrer endseitigen Stirnfläche an einer Ringfläche 20c in der Bohrung 20 anliegt. In den Bereich 20b ist der aus der Figur 1 bereits bekannte Spreizdübel 5 mit mindestens einem Schlitz 5b mit Abstand von der Stirnfläche der Zwischenhülse 10 so eingesetzt, dass er um einen vorgegebenen Betrag in die später eingeschobene Betätigungsstange 1 ragt. Die in der Figur 2 gezeichnete Lage dieses Spreizdübels 5 kann durch eine Presspassung, durch Klebung oder durch ein entsprechendes, jedoch nicht eingezeichnetes Gewinde gesichert werden. Auch hier ist in den Spreizdübel 5 eine Spannschraube 6 ähnlich der Figur 1 einge-dreht, über die die Schenkel 5c des Spreizdübels 5 gespreizt und dadurch die Betätigungsstange 1 in der Zwischenhülse 10 festgespannt werden kann. Damit bilden auch hier der Spreizdübel 5 und die Spannschraube 6 das sogenannte Anpresselement "A".

Die Zwischenhülse 10 besitzt, von ihrer ringförmigen Stirnfläche ausgehend, ferner in ihrem Bereich 20b ein Innengewinde 21, in welches durch den zylindrischen Teil 1 eine Schraube 22 eingedreht werden kann, deren mit einem Innensechskant versehener Kopf von der Ansenkung 12 aufgenommen wird. Durch entsprechendes Drehen dieser Schraube 22 kann die Zwischenhülse 10 weiter in die Bohrung 3 eingezogen werden. Bei dieser Bewegung gleiten die konischen Flächen 14 und 19 aufeinander mit Folge, dass das geschlitzte Ender der Zwischenhülse 10 von außen gegen die Betätigungsstange 1 gepresst und somit dieselbe von außen festgespannt wird. Hier bilden also die beiden konischen Flächen 14 und 19 das sogenannte Anpresselement "B". Das Lösen des Wechselgriffes 2 erfolgt in umgekehrter Weise.

Bekanntlich können die Innen- und Außendurchmesser von Betätigungsstangen 1 sehr stark voneinander abweichen. Dies kann es mit sich bringen, dass die beschriebenen und gezeichneten Anpresselemente "A" und "B" mit ihrer möglichen Spannbewegung diese Unterschiede nicht ausgleichen können. Das Ausführungsbeispiel der Figur 2 gibt nun die Möglichkeit, Zwischenhülsen 10 mit unterschiedlichen Innen- und/oder Außendurchmessern zu verwenden, durch diese Unterschiede in den Durchmessern der Betätigungsstangen 1 ausgeglichen werden können.

In Abänderung des Ausführungsbeispieles der Figur 1 kann die Spannschraube 6 - ähnlich wie bei der Figur 2 - auch in ein Innengewinde des Spreizdübels 5 eingedreht sein.

### Bezugszeichenliste

- "A": erstes Anpresselement
- "B": zweites Anpresselement
- 1: Betätigungsstange
- 2: Wechselgriff
- 3: Bohrung
- 3a: Bereich der Bohrung 3
- 3b: Bereich der Bohrung 3
- 3c: Bereich der Bohrung 3
- 4: Innengewinde
- 5: Spreizdübel
- 5a: Zapfen
- 5b: Schlitze
- 5c: Schenkel
- 6: Spannschraube
- 6a: Gewindezapfen
- 6b: Kopf
- 6c: Innensechskant
- 7: Ring
- 7a: Schlitz
- 8: Mutter
- 8a: Vertiefung
- 9: Spannschraube
- 10: Zwischenhülse
- 11: zylindrischer Teil
- 12: Ansenkung
- 13: Kragen
- 14: konische Ringfläche
- 15: umlaufende Rille
- 16: umlaufender Vorsprung
- 17: Schlitz
- 17a: Finger
- 18: Vertiefung
- 19: konische Ringfläche
- 20: Bohrung
- 20a: Bereich der Bohrung 20
- 20b: Bereich der Bohrung 20
- 20c: Ringfläche
- 21: Innengewinde
- 22: Schraube

## Patentansprüche

1. Wechselgriff für eine rohrförmige Betätigungsstange, beispielsweise von Spiel- und Fitnessgeräten, Fahrrädern oder dergleichen, mit einer einen Endbereich der Betätigungsstange aufnehmenden Bohrung,
**dadurch gekennzeichnet,**
**dass** innerhalb der Bohrung (1) des Wechselgriffes (2) zwei mit Abstand voneinander angeordnete Anpresselemente (A, B) ausgebildet sind, von denen das erste Anpresselement (A) an der Innenseite und das zweite Anpresselement (B) an der Außenseite der rohrförmigen Betätigungsstange (1) angreift.

2. Wechselgriff nach Anspruch 1,
**dadurch gekennzeichnet,**
**dass** das erste Anpresselement (A) am Ende und das zweite Anpresselement (B) am Anfang der Bohrung (3) des Wechselgriffes (2) angeordnet ist.

3. Wechselgriff nach Anspruch 1 oder 2,
**dadurch gekennzeichnet,**
**dass** das erste Anpresselement (A) durch einen am Ende der Bohrung (3) gehaltenen Spreizdübel (5) mit einem konischen Abschnitt und einer von außerhalb des Wechselgriffs (2) betätigbaren Spannschraube (6) gebildet ist.

4. Wechselgriff nach Anspruch 3,
**dadurch gekennzeichnet,**
**dass** der Spreizdübel (5) über ein Außengewinde in ein sich an das innere Ende der Bohrung anschließendes Innengewinde eindrehbar ist.

5. Wechselgriff nach Anspruch 4,
**dadurch gekennzeichnet,**
**dass** der Spreizdübel (5) in seiner Endlage im Wechselgriff (2) verklebar ist.

6. Wechselgriff nach mindestens einem der Ansprüche 1 bis 5,
**dadurch gekennzeichnet,**
**dass** der Spreizdübel (5) ein einen Gewindeschaft (6a) der Spannschraube (6) eindrehbar aufnehmendes Innengewinde besitzt.

7. Wechselgriff nach einem der Ansprüche 1 bis 6,
**dadurch gekennzeichnet,**
**dass** der Spreizdübel (5) und die Spannschraube (6) in einer zwischen Betätigungsstange (1) und Wechselgriff (2) vorgesehenen Zwischenhülse (10) angeordnet sind.

8. Wechselgriff nach einem der Ansprüche 1 bis 7,
**dadurch gekennzeichnet,**
**dass** das zweite Anpresselement (B) durch einen am Anfang der Bohrung (3) auf das Ende der Betätigungsstange (1) aufschiebbaren, einen radialen Schlitz (7a) aufweisenden Ring (7) mit einer in ein Innengewinde des Wechselgriffes (2) eindrehbaren Mutter (8) gebildet ist, und dass die Bohrung (3) des Wechselgriffes (2) im vorderen Abschnitt eine komplementären konische Fläche (3e) besitzt.

9. Wechselgriff nach Anspruch 8,
**dadurch gekennzeichnet,**
**dass** der Ring (7) aus Kunststoff gebildet ist.

10. Wechselgriff nach mindestens einem der Ansprüche 1 bis 7,
**dadurch gekennzeichnet,**
**dass** das zweite Anpresselement (B) durch jeweils an den offenen Enden von Wechselgriff (2) und Betätigungsstange (1) vorgesehene konische Flächen (14, 19) gebildet und der Wechselgriff (2) in axialer Richtung gegen die Zwischenhülse (10) verspannbar ist.

11. Wechselgriff nach mindestens einem der Ansprüch1 1 oder 10,
**dadurch gekennzeichnet,**
**dass** derselbe im aus Metall, vorzugsweise Aluminium, oder aus Kunststoff besteht.

12. Wechselgriff nach mindestens einem der Ansprüche 1 bis 10,
**dadurch gekennzeichnet,**
**dass** der Wechselgriff (2) einen Kern aus Metall, vorzugsweise aus Aluminium aufweist und eine Ummantelung aus Kunststoff oder Holz besitzt.
